# EUROPEAN PATENT APPLICATION

(11) **EP 4 811 188 A1**
(43) Date of publication of application: **23.09.2026**
(21) Application number: 26165232.5
(22) Date of filing: 16.03.2026
(51) Int. Cl.: G06F 21/44, G06F 21/62, H04L 9/40, G06F 21/50, G06N 20/00

(54) **SYSTEM AND METHOD FOR CONJUNCTION-BASED ACCESS CONTROL**

(30) Priority: 17.03.2025 US 202563773043 P; 12.02.2026 US 202663981675 P
(71) Applicant: Manetu, Inc., Ridgewood, New Jersey 07450 (US)
(72) Inventor: HASKINS, Gregory, Ridgewood, 07450 (US); ALLAN, Conor, Ridgewood, 07450 (US)
(74) Representative: Anderson, Oliver Ben

(57) **Abstract**

A computer-implemented method and system for access control are provided. A request to access a secure resource is received, and an access control data representation is created encoding attributes of the request. A plurality of policy classes is assembled and selected based on the access control data representation, and the plurality of policy classes may include a principal-related, a resource-related, an access-method-related, and a system-related policy class. Each policy class is evaluated by applying a logical OR across its member policies to generate a plurality of evaluations, and a logical AND is applied across the plurality of evaluations to determine whether all policy classes are satisfied. Access to the secure resource is allowed when at least one policy from each implicated policy class is satisfied and denied when any one policy class is not satisfied. Short-circuit evaluation terminates processing upon determining any policy class is unsatisfied.

## Description

### CROSS REFERENCE TO RELATED APPLICATIONS

This application claims priority, under 35 U.S.C. § 119, of U.S. Provisional Patent Application No. 63/773,043, filed March 17, 2025, and titled "Access Control Decision Method: Applying A Conjunction Of Disjunctions," and U.S. Provisional Patent Application No. 63/981,675, filed February 12, 2026, and titled "A Secure Hypervisor for Agentic AI Applications," both of which are incorporated by reference in their entirety.

### TECHNICAL FIELD

The present disclosure relates to systems and methods for determining an access control decision.

### BACKGROUND

The proliferation of large language model (LLM)-based artificial intelligence (AI) systems has created a new paradigm of autonomous AI agents that can execute multi-step tasks, interact with external systems, and operate on behalf of human users. These agents frequently require access to external tools, application programming interfaces (APIs), databases, and services to accomplish their objectives, and protocols such as the Model Context Protocol (MCP) have emerged to standardize how AI agents discover and invoke such external tools. While this model greatly increases flexibility and capability, it also introduces new security and governance challenges for controlling what actions an agent may perform and under what conditions.

In typical deployments, AI agents are granted broad or unrestricted access to all tools registered with their runtime, without fine-grained authorization based on user identity, task context, or resource sensitivity. Agents often handle API keys, passwords, and tokens to reach external services, and conventional approaches expose these credentials directly inside the agent runtime, creating risks of credential leakage, misuse, or exfiltration. Although container or Virtual Machine (VM) isolation can provide process-level separation, these mechanisms do not enforce fine-grained policy controls on individual tool invocations, operations, or data flows at the application layer.

When agents act on behalf of users, existing systems typically lack robust mechanisms to represent and track delegation chains, making it difficult to reconstruct a complete audit trail of "who did what, on whose behalf, and under which authorization." Static role-based access control (RBAC) models further limit security by assigning coarse-grained permissions at deployment time that cannot adapt to runtime factors such as resource attributes, user clearance levels, or dynamic environmental conditions. As a result, operator visibility into agent behavior is often opaque: operators may not know which tools an agent invoked, which data it accessed, or which external communications it initiated.

Container isolation technologies such as Docker, runc, or Kubernetes pods provide important process and namespace isolation, but they do not address application-layer authorization; once inside its container, an agent can typically invoke any tool for which it has configuration or credentials. Traditional RBAC systems, while widely deployed, define permissions statically and are ill-suited for attribute-rich, dynamic access control scenarios where policies must depend on combinations of user, resource, operation, and contextual attributes. API gateway-based authorization, although effective at enforcing coarse network-boundary checks, lacks visibility into tool-specific semantics, argument-level constraints, and fine-grained result filtering. Secrets-management solutions securely store credentials but typically release those credentials to applications, which then hold them in memory and reuse them, leaving residual exposure risk if the application or runtime is compromised.

### SUMMARY

According to one aspect of the present disclosure, a computer-implemented method for performing access control is disclosed. The method comprises receiving, by one or more processors, a request to access a secure resource; creating, by one or more processors, an access control data representation; assembling and selecting a plurality of policy classes based on the access control data representation; evaluating whether the plurality of policy classes is satisfied to generate a plurality of evaluations; determining whether the plurality of evaluations is satisfied; responsive to determining that the plurality of evaluations is satisfied, allowing access to the secure resource; and responsive to determining that one of the plurality of evaluations is not satisfied, denying access to the secure resource.

According to another aspect of the present disclosure, a system for performing access control is disclosed. The system comprises one or more processors and a memory operably coupled with the one or more processors, wherein the memory stores instructions that, in response to execution of the instructions by one or more processors, cause the one or more processors to perform operations of: receiving a request to access a secure resource; creating an access control data representation; assembling and selecting a plurality of policy classes based on the access control data representation; evaluating whether the plurality of policy classes is satisfied to generate a plurality of evaluations; determining whether the plurality of evaluations is satisfied; responsive to determining that the plurality of evaluations is satisfied, allowing access to the secure resource; and responsive to determining that the plurality of evaluations for each class is not satisfied, denying access to the secure resource.

In some implementations, one or more of the following features may also be present. The access control data representation may comprise a principal portion having an identity attribute, a role attribute, and a security clearance attribute of a requesting principal; an operation portion having an action type attribute of a requested operation; a resource portion having an attribute of a resource being accessed; and a context portion having an environment attribute associated with the request to access.

The plurality of policy classes may be selected from a group comprising: a principal-related policy class having one or more policies that govern access based on an attribute of a requesting principal; a resource-related policy class having one or more policies that govern access based on an attribute of a resource for which access is requested; an access-method-related policy class having one or more policies that govern access based on how an operation is performed; and a system-related policy class having one or more policies that govern access based on system-wide conditions.

The assembling and selecting the plurality of policy classes selects four policy classes and the four policy classes are a principal-related policy class having one or more policies that govern access based on an attribute of an requesting principal, a resource-related policy class having one or more policies that govern access based on an attribute of a resource for which access is requested, an access-method-related policy class having one or more policies that govern access based on how an operation is performed, and a system-related policy class having one or more policies that govern access based on system-wide conditions.

The assembling and selecting the plurality of policy classes may comprise identifying policy classes specified in the access control data representation; retrieving the policy classes specified in the access control data representation; determining one or more policies for each of the policy classes; grouping the one or more policies by class; and assembling a class grouping for evaluation.

The evaluating whether the plurality of policy classes is satisfied to generate an evaluation per class may comprise applying a logical OR to individual results of policy evaluations within each policy class such that the policy class is satisfied when at least one policy in the class is true.

The determining whether the plurality of evaluations is satisfied may include applying a logical AND between the plurality of evaluations to determine that all classes are satisfied.

The evaluating whether the plurality of policy classes is satisfied may further comprise aggregating evaluation results for the plurality of policy classes and applying a short-circuit evaluation to policies and policy classes, terminating evaluation upon determining any policy is satisfied or any policy class is unsatisfied.

The method may further comprise recording, by an audit module, information associated with a deny-access operation and an allow-access operation, and storing the recorded information for governance, monitoring, or compliance purposes by policy classes and policies.

In some implementations, the request to access the secure resource is received from an AI agent executing within a guest sandbox that operates with network isolation such that it has no network interface and cannot initiate direct network connections.

Other implementations of one or more of these aspects include corresponding systems, apparatus, methods, and non-transitory computer-readable media configured to perform the actions described herein, encoded on computer storage devices. These and other implementations may each optionally include one or more of the features described herein. The features and advantages described herein are not all-inclusive, and many additional features and advantages will be apparent in view of the drawings, specification, and claims. It should be understood, however, that this list of features and advantages is not all-inclusive and many additional features and advantages are contemplated and fall within the scope of the present disclosure. Moreover, it should be understood that the language used in the present disclosure has been principally selected for readability and instructional purposes, and not to limit the scope of the subject matter disclosed herein.

### BRIEF DESCRIPTION OF THE DRAWINGS

The present disclosure is illustrated by way of example, and not by way of limitation in the figures of the accompanying drawings in which like reference numerals are used to refer to similar elements.
Figure 1 is a block diagram illustrating an example secure system including an access control system and an AgentVisor in accordance with some implementations.
Figure 2 is a general method of performing access control in accordance with some implementations.
Figures 3A and 3B are a detailed method of performing access control in accordance with some implementations.
Figure 4 is a block diagram illustrating an example of an access control data representation for a request in accordance with some implementations.
Figure 5 is a block diagram illustrating example policy classes in accordance with some implementations.
Figure 6 is a block diagram illustrating an example data flow through example policy classes based on the access control data representation in accordance with some implementations.
Figure 7 is a block diagram illustrating an example architecture for implementing the AgentVisor in accordance with some implementations.
Figure 8 is a flowchart of a general method for AgentVisor processing in accordance with some implementations.
Figure 9 is a flowchart of a method for communication interception in accordance with some implementations.
Figures 10A, 10B and 10C are a flowchart of a method for workflow-based execution in the host in accordance with some implementations.
Figure 11 is a flowchart of a method for credential substitutions and resolution in accordance with some implementations.
Figure 12 is a timing diagram showing example execution by the AgentVisor in accordance with some implementations.

### DETAILED DESCRIPTION

This present disclosure describes a system and method for determining an access control decision-allow or deny- for access to computing resources and data by evaluating a set of policies organized according to a specific logical scheme. In some implementations, the system and method are particularly advantageous for controlling access to systems and data by AI agents. In some implementations, authorization is determined by evaluating multiple policies and rule sets that are organized into multiple policy classes, with at least two such classes and each policy class including one or more policies. In one aspect, overall access is authorized when, and only when, at least one policy from each policy class allows access, thereby implementing a conjunction of disjunctions across the policy classes.

Defining policies in classes that can be independently authored, managed, and evaluated simplifies complex governance and access-control ecosystems. By decomposing access logic into principal-related, resource-related, operation or access-method-related, and system-related policy classes, for example, the approach of the present disclosure makes it easier to express complex access-control schemes while still supporting highly dynamic and context-specific authorization decisions. Policy authors can reason about and modify policies within a given class without needing to understand or rewrite all other classes, which improves maintainability and reduces the likelihood of unintended side effects in large, evolving environments.

In some implementations, the system and method improve efficiency by combining modular policy classes with short-circuit evaluation. Sometimes referred to herein as "conjunction of disjunctions." More specifically, both policies in policy classes and policy classes can be evaluated in parallel. This provides a short circuit behavior applies both within policy classes (at least one policy yields a short circuit to allow the class) and no policy allowed in a class produces a deny short circuit for the overall evaluation decision for all classes. For example, policies and policy classes are evaluated only until an overall decision can be made. If any policy class fails to produce an allowing policy, evaluation can terminate early with a deny decision, without evaluating all remaining policies or classes. This short-circuit behavior yields faster decisions and reduces processing overhead while preserving the desired authorization semantics of "at least one allow per class and all classes satisfied." Because policies are modular and localized to classes, they can be reviewed, tested, and reasoned about independently, which reduces the risk that policy changes will have unforeseen consequences in systems with complex, changing, and nuanced access-control requirements.

The system and method may be effective in large-scale systems that manage millions or billions of resources and require fine-grained access control decisions, such as multi-tenant data platforms, enterprise knowledge graphs, or large MCP-connected tool ecosystems. At the same time, the approach remains applicable in smaller-scale environments where complex and fine-grained policies are needed but system resources are constrained. The scalability of the conjunction-of-disjunctions evaluation, combined with short-circuit processing, which processing may in some implementations be performed in parallel, supports low-latency and high-throughput authorization decisions, enabling secure, explainable, and context-aware control over AI agents and other automated systems operating in dynamic environments.

For purposes of the present disclosure, the following terms are used as defined below. These definitions are provided for convenience of explanation and are not intended to be limiting unless expressly recited in the claims.

As used herein, the term "policy" refers to a set of requirements or rules that define access permissions based on one or more attributes, such as user or principal identity, role, group membership, resource type, location, time, or other characteristics relevant to an access control decision. An "access control decision" refers to an outcome of evaluating one or more policies (for example, across multiple policy classes) to determine whether access to a resource should be allowed or denied.

As used herein "principal" or "principal/identity" refers to an entity (such as a user, application, service, or process) requesting access to a resource. Attributes associated with a principal can include, without limitation, identity attributes, group memberships, roles, security clearances, principal types, and other properties describing the principal's relationship to a system. "Attributes" more generally refer to specific characteristics or properties associated with a principal, an operation, a resource, or a context, such as location, authentication level, group membership, role, device type, or other descriptive data.

As used herein "PORC" refers to a structured access control data representation that includes four categories of attributes: Principal, Operation, Resource, and Context. The Principal portion corresponds to attributes of the requesting principal or identity (for example, a user, application, or service), such as identity attributes, group memberships, roles, or clearance levels. The Operation portion specifies attributes of the requested operation (for example, create, read, write, execute, subscribe, publish, or delete, along with any access-method specifics). The Resource portion describes attributes of the resource being accessed, such as a resource identifier, resource type, membership in one or more resource groups, sensitivity, location, domain, or organizational unit. The Context portion includes environmental or situational attributes associated with the access attempt, such as time of day, date, geographic location or IP address, device and authentication information, multi-factor authentication status, or alert level.

As used herein, "conjunction-based authorization" refers to a method of determining authorization by evaluating a conjunction of multiple policy classes. A "policy class" refers to a grouping of policies that govern a particular aspect or class of access control (for example, a principal-related policy class, a resource-related policy class, an access-method-related policy class, or a system-related policy class). A "principal-related policy class" includes rules that dictate access rights based on a principal's identity and related attributes such as roles and group memberships. A "resource-related policy class" includes policies associated with a resource that define access control requirements for that resource. An "access-method-related policy class" includes policies concerning how access is attempted, such as through particular protocols, interfaces, or network segments, and a "system-related policy class" includes policies related to system-wide conditions or constraints (for example, tenancy or subsystem isolation).

As used herein "resource group" refers to a collection of resources sharing common attributes or policies for simplified management in access control evaluations. "Policy evaluation" refers to the evaluation of a policy using PORC data to arrive at an intermediate decision, such as allow or deny, for that policy. "Policy disjunction" refers to the process of evaluating one or more policies within a policy class by applying a logical OR to the individual results of policy evaluations when a class has a plurality of policies, such that the policy class is satisfied when at least one policy in the class allows access. "Policy conjunction" refers to the process of evaluating multiple policy classes together by applying a logical AND to their respective class outcomes, such that an overall access control decision to allow access is made only when each of the evaluated policy classes is satisfied.

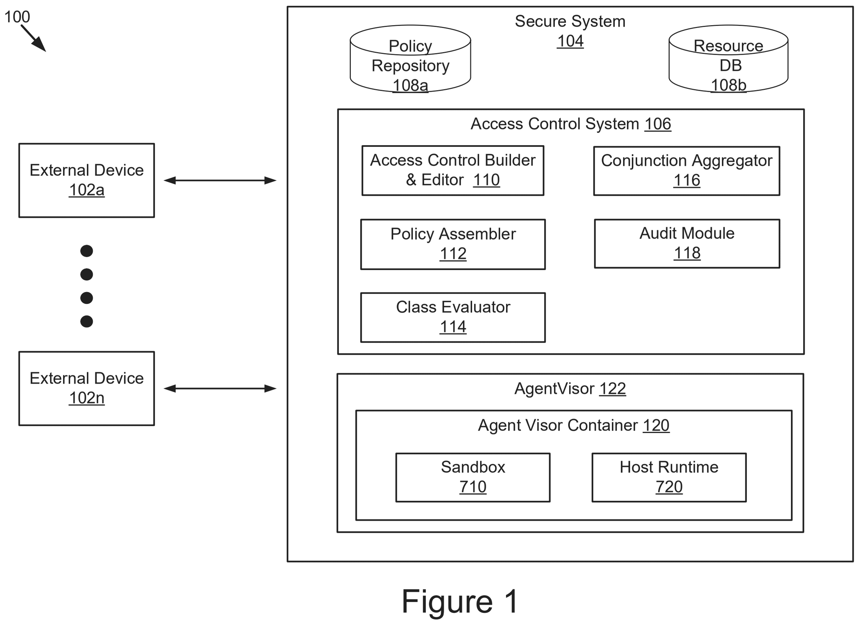

Figure 1 is a block diagram illustrating an example system 100 implementing access control in accordance with some implementations. The system 100 includes a secure system 104 configured to communicate with one or more external devices 102a-102n.

The external devices 102a-102n are coupled for communication with the secure system 104 via respective bidirectional communication links, for example a network. The external devices 102a-102n are one or more computing devices that have data processing and communication capabilities but are external to the secure system 104. The external devices 102a-102n may include a processor, a memory, a communication unit, local data storage, an output device, an input device, and other software operational on the external devices 102a-102n.

The secure system 104 manages access control to its components and manages secure agent execution. The secure system 104 includes a policy repository 108a, a resource database 108b, an access control system 106, and a AgentVisor 122. Although not shown, the secure system 104 may be one or more computing devices, a hardware server, a combination of a hardware server and the software server, or any other computing device(s). The computing devices may include a processor, a memory, a communication unit, an output device, an input device, and other software. The secure system 104 is coupled for communication with its components as described below. The secure system 104 is also configured to communicate with the one or more external devices 102a-102n, (e.g., via a network) which may issue requests to access secured resources managed by secure system 104. Upon receiving a request to access a secured resource, secure system 104 evaluates the context of the request, where the context may include one or more of: an identity associated with the request, a requested resource, an environment in which the request is made, and pertinent facts related to the request.

The policy repository 108a and the resource database 108b are data stores coupled for interaction and communication with the other components of the secure system 104. The policy repository 108a and the resource database 108b can include one or more non-transitory computer-readable media for storing the data. In some implementations, the policy repository 108a and the resource database 108b may be incorporated with a memory or may be distinct therefrom. In some implementations, the policy repository 108a and the resource database 108b may include a database management system (DBMS). For example, the DBMS could include a structured query language (SQL) DBMS, a NoSQL DBMS, various combinations thereof, etc. In some implementations, the DBMS may store data in multi-dimensional tables comprised of rows and columns, and manipulate, e.g., insert, query, update and/or delete, rows of data using programmatic operations. While the policy repository 108a and the resource database 108b are shown in Figure 1 as being part of the secure system 104, in some implementations they may be directly coupled via a network and not included in the secure system 104. Even in such configurations, access to them is controlled by the secure system 104. The policy repository 108a is configured to store modular policies and rule sets organized into multiple policy classes. The policies or rule sets are organized into multiple (at least two) policy classes, each policy class including one or more policies, where each policy class is logically a disjunction of its member policies. The resource database 108b is configured to store resource data and contextual information associated with resources controlled by the access control system 106.

The access control system 106 may be steps, processes, functionalities, software executable by a processor, or a device including routines to manage access to protected resources, evaluate policies, and enforce access decisions (allow or deny) based on those policies. The access control system 106 comprises an access control builder and editor 110, a policy assembler 112, a class evaluator 114, a conjunction aggregator 116, and an audit module 118. The access control system 106 is configured to determine whether an external device 102 acting as a requestor is authorized to access a secured resource by evaluating a conjunction of the multiple policy classes, such that overall access is authorized only when at least one policy from each of the multiple policy classes allows access (a conjunction of disjunctions). In some implementations, the access control builder and editor 110, the policy assembler 112, the class evaluator 114, the conjunction aggregator 116, and the audit module 118 are sets of instructions stored in memory executable by a processor to provide their respective acts and/or functionality. In any of these implementations, the access control builder and editor 110, the policy assembler 112, the class evaluator 114, the conjunction aggregator 116, and the audit module 118 may be adapted for cooperation and communication with each other, a processor, other components of a server by a bus and other components of the secure system 104.

The access control builder and editor 110 may be steps, processes, functionalities, software executable by a processor, or a device including routines to define and edit access control policies. More particularly, the access control builder and editor 110 may define, modify, organize, test, or maintain the policies and resources. In some implementations, the access control builder and editor 110 may define policy classes and policies, manage PORC schema and attributes, define resources and resource notations, define policy domain and role configuration, or build access-method and system constraints. Once the access control builder and editor 110 has created policies, classes, and instances of groups of them, it can store them in the policy repository 108a. The access control builder and editor 110 is coupled for communication and interaction with the other components of the access control system 106 and the secure system 104.

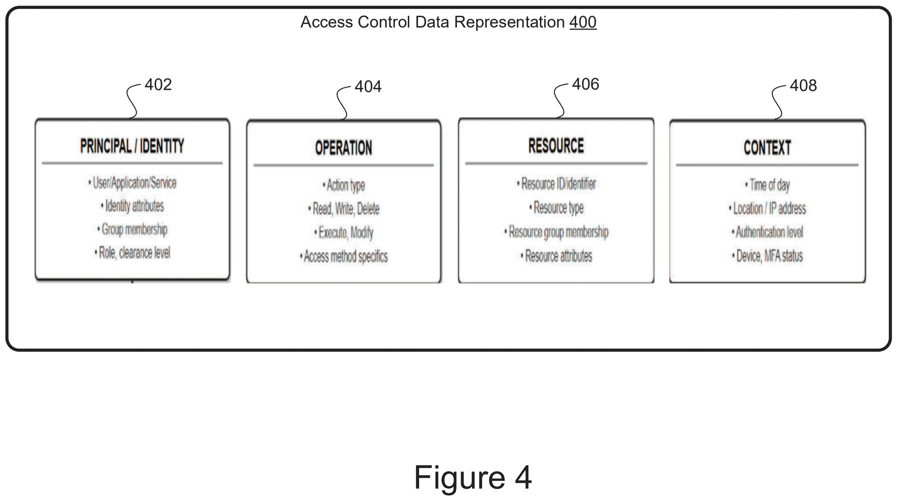

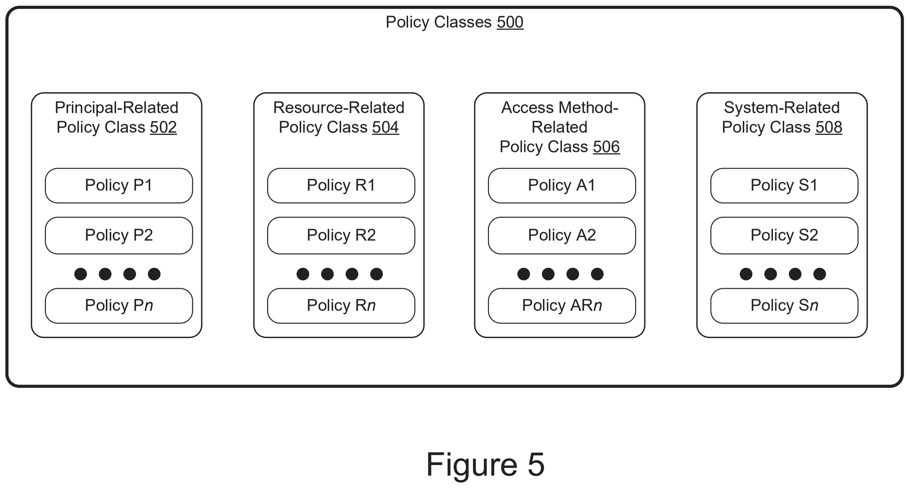

The policy assembler 112 may be steps, processes, functionalities, software executable by a processor, or a device including routines to assemble policies and/or policy components for evaluation. In some implementations, the policy assembler 112 retrieves and groups policies for each class and assembles based on request attributes. This includes analyzing the PORC (see Figure 4) to generate a set of policy classes (see Figure 5). The policy assembler 112 is configured to assemble policies or policy components from the different policy classes for evaluation. The policy assembler 112 is coupled for communication and interaction with the other components of the access control system 106 and the secure system 104. In particular, the policy assembler 112 is coupled to provide an assembled group of policies and policy classes to class evaluator 114.

The class evaluator 114 may be steps, processes, functionalities, software executable by a processor, or a device including routines to evaluate policies, classes or groupings of subjects or resources in view of an assembled policy and resource data. In some implementations, the class evaluator 114 independently evaluates a single policy class by applying a logical OR (disjunction) across its assembled policies using PORC input, yielding an Allow (if any policy allows) or Deny (if all deny) for that class. The class evaluator 114 is coupled for communication and interaction with the other components of the access control system 106 and the secure system 104. In particular, the class evaluator 114 is coupled to receive policies grouped in classes from the policy assembler 112 and send an evaluation result for each class to the conjunction aggregator 116.

The conjunction aggregator 116 may be steps, processes, functionalities, software executable by a processor, or a device including routines to combine policy evaluation results from the multiple policy classes and to apply short-circuit evaluation so that policies are evaluated only until an overall access control decision can be made, thereby improving efficiency and reducing processing overhead, particularly in large-scale systems requiring low-latency, high-throughput, fine-grained authorization. The conjunction aggregator 116 may take the Allow/Deny results from all evaluated policy classes and apply a logical AND (conjunction), producing the final access control decision to either Allow if every class allows, or deny if even a single class denies. The conjunction aggregator 116 is coupled for communication and interaction with the other components of the access control system 106 and the secure system 104. In particular, the conjunction aggregator 116 is coupled to receive the evaluation result for each class from the class evaluator 114 and provide the Allow/Deny results to the access control system 106 to forward to the external device 102.

The audit module 118 may be steps, processes, functionalities, software executable by a processor, or a device including routines to capture, log, and report access control decisions and enforcement actions for compliance, debugging, and forensic analysis. In some implementations, audit module 118 records or logs access requests, policy evaluations, and resulting decisions, enabling the modular policies and classes to be reviewed, tested, and understood independently to reduce the risk of unintended consequences in complex and evolving access control environments. The audit module 118 is coupled for communication and interaction with the other components of the access control system 106 and the secure system 104.

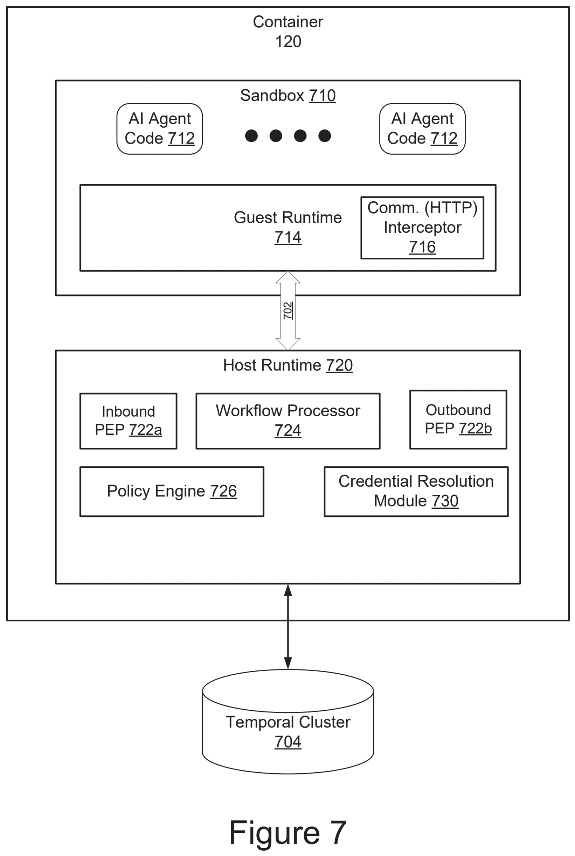

The AgentVisor 122 may be steps, processes, functionalities, software executable by a processor, or a device including routines to isolate untrusted code, mediate external access and enforce fine-grained authorization before allowing any resource interaction. In some implementations, the AgentVisor 122 is a secure hypervisor and runtime environment designed for executing autonomous AI agents in production settings. It uses a host-guest architecture where untrusted agent code runs in a heavily isolated sandbox with no direct network or host access, while a trusted host runtime mediates all external interactions like API calls and state management. The AgentVisor 122 includes one or more agent visor containers 120 to provide isolated execution environment services. The agent visor container 120 is configured to host and manage AI agent execution within isolated sandboxes, implementing defense-in-depth security controls as described in connection with Figures 7-12. In some implementations, the AgentVisor 122 coordinates with access control system 106 to enforce fine-grained authorization policies on agent operations, ensuring that agents execute with appropriate security boundaries and credential isolation. More specifically, in some implementations, the AgentVisor 122 provides strong isolation for running untrusted workloads by mediating all access to system resources (network, storage, credentials, external APIs) through a trusted runtime layer. The AgentVisor 122 prevents direct host/kernel interaction via syscall interception or VM boundaries, enforces fine-grained policy decisions before forwarding requests, and ensures workloads remain contained even if compromised. In practice, this means AI agents or containers execute in locked-down sandboxes where every external call-HTTP, database, tools-is inspected, authorized, and proxied with substituted/isolated credentials. The AgentVisor 122 is particularly advantageous because it provides sandbox isolation within the Agent Visor container 120, communication (HTTPS) interception using an ephemeral Certificate Authority for transparent TLS decryption of agent traffic, enabling policy checks without code changes, and credential security by using symbolic tokens substituted at the host boundary thereby keeping real API keys out of the sandbox. The AgentVisor 122 is coupled for communication and interaction with the other components of the access control system 106 and the secure system 104.

An agent visor container 120 comprises a sandbox 710 and a host runtime 720 in addition to other components. The agent visor container 120 is one an instance of a secure runtime (sometimes referred to herein as a "secure hypervisor") for executing untrusted or semi-trusted AI agent code in production environments. Although Figure 1 only shows one instance of an agent visor container 120, it should be understood that the AgentVisor 122 may instantiate any number of agent visor containers 120 The agent visor container 120 runs a guest sandbox, has proxied communication, and communication is managed by the policy engine within the secure hypervisor architecture. More specifically, a guest sandbox runs untrusted AI agent code (Python/LangGraph) under 12-layer defense-in-depth isolation-no direct network, host kernel access (gVisor syscall interception), read-only filesystem, per-agent UIDs, seccomp filtering, etc. External interactions are proxied and routed through a dedicated HTTP proxy → guest runtime (Go) → gRPC over Unix socket → host runtime for policy evaluation. The policy engine enforces a policy gate that evaluates PORC before proxying (HTTP/MCP tools) or state operations (Temporal workflows). Deny blocks via gRPC error. The operation of the agent visor container 120 is described in more detail below with reference to Figure 7. The agent visor container 120 is coupled for communication and interaction with the other components of the access control system 106 and the secure system 104.

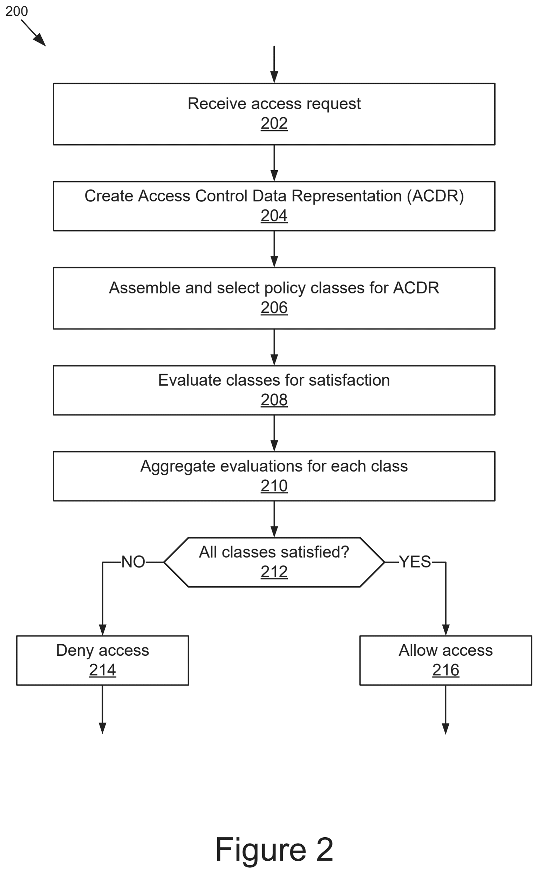

Figure 2 is a flow diagram illustrating a method 200 of performing access control in accordance with some implementations. The method 200 determines an access control decision, such as whether to allow or deny access to a secured resource, by evaluating multiple classes of policies according to a conjunction-of-disjunctions scheme.

At step 202, the secure system 104, in particular, the access control system 106, receives an access request from a requesting entity to access a secured resource, e.g., resource database 108b. The access request may originate from an external device 102, user, service, or process seeking access to one or more resources managed by the secure system 104.

At step 204, the access control system 106 creates an access control data representation (ACDR) for the access request. The ACDR encodes context information used for authorization, including at least one of: an identity associated with the request, a description of the requested resource, an environment in which the request is made, and pertinent facts related to the request.

At step 206, the access control system 106, for example, the policy assembler 112, assembles and selects a plurality of policy classes for evaluating the ACDR. The policies or rule sets are organized into multiple (at least two) policy classes, each policy class including one or more policies, with each policy class being represented as a disjunction of its policies.

At step 208, the access control system 106, for example, the class evaluator 114, evaluates the selected policy classes for satisfaction with respect to the ACDR. For each policy class, the access control system 106 determines whether at least one policy in that policy class allows access based on the context encoded in the ACDR.

At step 210, the access control system 106, for example, the conjunction aggregator 116, aggregates the evaluations for the policy classes. In some implementations, the aggregation is performed as a conjunction across the policy classes such that overall access is authorized when, and only when, each of the multiple policy classes contributes at least one policy that allows access, thereby forming a conjunction of disjunctions.

At step 212, the access control system 106 determines whether all of the policy classes are satisfied. The method 200 may employ short-circuit evaluation such that policies and policy classes are evaluated only until an overall access control decision (allow or deny) can be determined, without necessarily evaluating all policies in all classes, thereby improving efficiency, and reducing processing overhead.

If, at step 212, at least one policy class is not satisfied, the method 200 proceeds to step 214, where the access control system 106 denies access to the secured resource in response to the access request. If, at step 212, all of the policy classes are satisfied, the method 200 proceeds instead to step 216, where the access control system 106 allows access to the secured resource in response to the access request. This modular, class-based evaluation approach simplifies expression and management of complex access-control schemes and scales to systems requiring fine-grained, low-latency, high-throughput authorization decisions.

The operations of method 200 in Figure 2 may be performed by the access control system 106 and associated components of the secure system 104 illustrated in Figure 1. In some implementations, the access control system 106 receives the access request at step 202 from one of the external devices 102a--102n, creates the ACDR at step 204 using context and resource information obtained from the policy repository 108a and resource database 108b, and assembles and selects the policy classes at step 206 using the policy assembler 112 and access control builder and editor 110. The class evaluator 114 performs the class evaluations at step 208, the conjunction aggregator 116 aggregates the class evaluation results at step 210 and facilitates the determination at step 212, and an audit module 118 records data associated with the deny-access operation at step 214 and the allow-access operation at step 216.

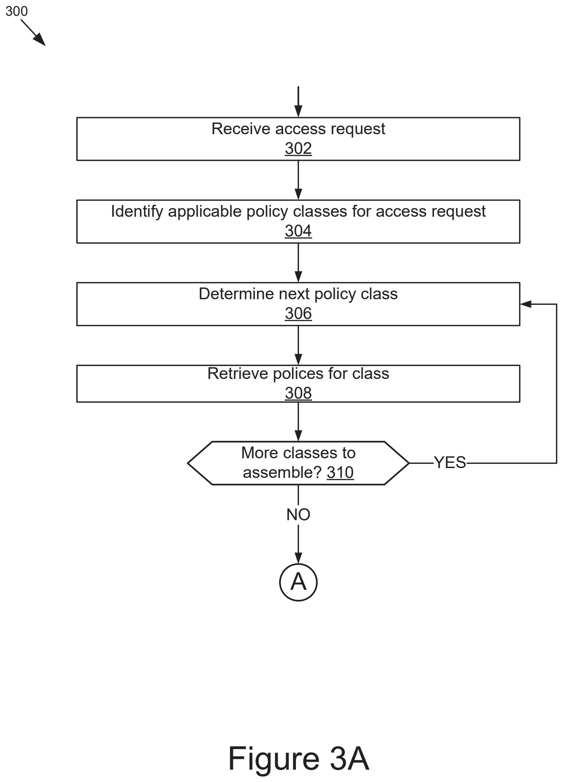

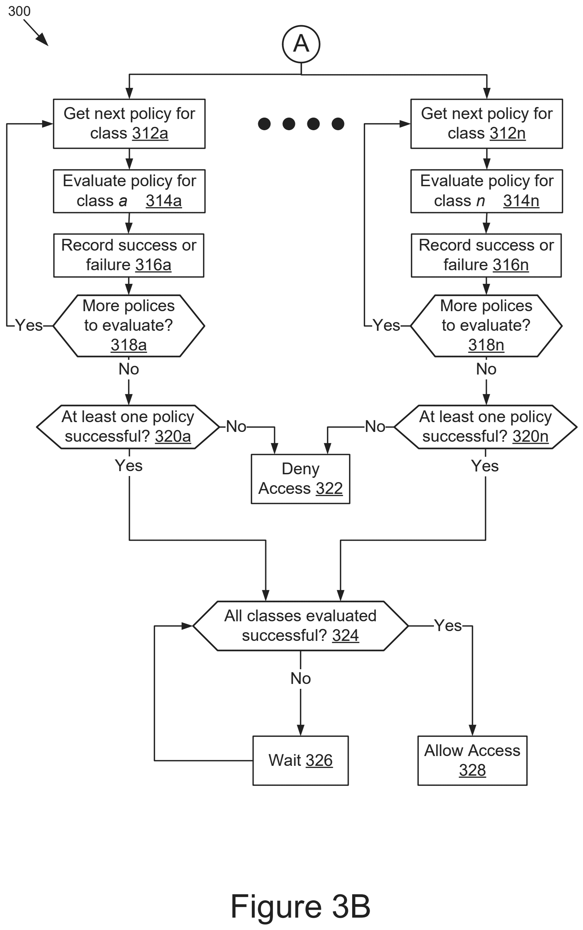

Figures 3A and 3B are a flow diagram illustrating a detailed method 300 of performing access control in accordance with some implementations, in which an access control decision is made by evaluating policies and rules organized into policy classes as generally shown in Figure 1. A system and method evaluate multiple (at least two) policy classes, where each policy class governs a specific aspect of access control; for example, a Principal-related policy class and a Resource-related policy class are provided, and additional policy classes, such as an Access-Method-related policy class or a System-related policy class, may be included to group additional constraints into areas of concern.

Figure 3A depicts the policy assembly phase of method 300, beginning at step 302, where the secure system 104 receives an access request from a requesting entity to access a resource.

At step 304, the secure system 104, for example, the access control system 106, identifies applicable policy classes for the access request, including at least the Principal-related and Resource-related policy classes and, in some implementations, one or more additional policy classes such as an Access-Method-related policy class or a System-related policy class.

At step 306, the secure system 104 determines a next policy class to process from among the applicable policy classes, and at step 308, the secure system 104 retrieves policies for the determined policy class based on various selection criteria. For example, Principal-related policies may be selected based on principal identity, group membership, role, security clearance, or other principal attributes, and Resource-related policies may be selected based on a specific resource, its membership in a resource group, its sensitivity, location, or other resource attributes.

At step 310, the secure system 104 determines whether there are more policy classes to assemble for the access request; if so, the method 300 returns to step 306 to determine the next policy class and retrieve its policies at step 308. If no additional policy classes need to be assembled, the method 300 proceeds to steps 312a to 312n of Figure 3B for policy evaluation.

Figure 3B depicts the policy evaluation phase of method 300, continuing from step 310 where policy assembly was completed. The evaluation proceeds in parallel for each assembled policy class. More specifically, steps 312 to 320 for each policy class may be performed in parallel. Additionally, if there are a significant number of policy classes and/or policies within each class, the processing may be distributed over a plurality of computing devices.

For each policy class, such as a first policy class "a," at step 312a the secure system 104 gets a next policy for class "a" to evaluate. At step 314a the secure system 104 evaluates the policy of class "a" using the PORC data, which may include principal attributes (e.g., identity, principal type, roles or group memberships, security clearance, physical location, authentication level), operation attributes (e.g., create, read, write, execute, subscribe, publish, delete), resource attributes (e.g., sensitivity, location, resource group, domain, organizational unit, consent requirement), and context attributes (e.g., date, time, alert level).

At step 316a, the secure system 104 records the success or failure of the evaluated policy for class "a". At step 318a, the secure system 104 determines whether more policies remain to be evaluated for class "a." If more policies remain, the method 300 returns to step 312a to get the next policy for class "a"; otherwise, the method 300 proceeds to step 320a.

At step 320a, the secure system 104 determines whether at least one policy was successful for class "a" (i.e., at least one policy in the class allows access). If no policy in class "a" allows access, the method 300 proceeds to step 322 to deny access in response to the access request, representing an example of the "Deny" result. This is particularly advantageous because it avoids having to compare classes in step 324. If at least one policy in class "a" allows access, the class is satisfied and evaluation continues.

A similar evaluation is performed for another policy class "n," where steps 312n, 314n, 316n, 318n, and 320n perform per-policy retrieval, evaluation, recording, determination of remaining policies, and success checking for class "n," respectively, with failure to have at least one successful policy at step 320n also causing denial at step 322. It should be understood that any number of policy classes may be evaluated in parallel.

At step 324, the secure system 104 determines whether all policy classes applicable to the access request have been evaluated successfully. In some implementations, policies within each policy class are combined using a logical OR such that the policy class is satisfied when at least one policy in that class allows access, and the results of the policy classes are combined using a logical AND in step 324 such that access is allowed only when every governing policy class is satisfied, thereby implementing a conjunction of disjunctions across the policy classes.

If, at step 324, all policy classes have been evaluated and each policy class has at least one policy that allows access, the method 300 proceeds to step 328 to allow access in response to the access request, representing an example of the "Allow" result. If one or more policy classes remain to be evaluated, the method 300 may proceed to step 326 to wait, for a predetermined amount of time, for example, for additional policy classes to completed their policy review before returning to step 324 to test again whether all policy classes have been evaluated.

This structured composition-logical OR across policies within a class and logical AND across the results of the policy classes-allows individual policies and rule sets to be evaluated, modified, and understood in isolation without adversely impacting the overall system, thereby supporting explainable, maintainable access control. By organizing constraints into policy classes aligned with areas of concern and evaluating them with PORC data, the method 300 provides scalable and adaptable data governance that supports complex and sophisticated access control requirements while ensuring that data access remains secure and contextually appropriate. In some implementations, if all policy classes have been evaluated and answers have been received for all policy classes, where one of the policy classes has not received a successful evaluation, access will be denied. This denial may also be described as the result of an unsuccessful AND logic across the policy classes. This means that the conjunction portion was unsuccessful and resulted in a denial of access. The described method 300 may be performed with each policy class being evaluated in series. Alternatively, and preferably, the method 300 may be performed in which multiple policy classes being evaluated simultaneously, or in parallel. In some implementations a single policy class is evaluated at one time. In some implementations more than one policy class is evaluated simultaneously, or in parallel. In some implementations all policy classes are evaluated simultaneously, or in parallel.

The operations of method 300 shown in Figures 3A and 3B may be implemented by the access control system 106 and related components of the secure system 104 described with reference to Figure 1. In some implementations, the access control system 106 receives the access request at step 302 from one of the external devices 102a--102n, and an access control builder and editor 110 and policy assembler 112 cooperate at steps 304, 306, and 308 to identify applicable policy classes, determine a next policy class, and retrieve policies for that class from the policy repository 108a using PORC data. The class evaluator 114 performs the per-policy evaluations at steps 314a and 314n, records success or failure at steps 316a and 316n, and checks for additional policies at steps 318a and 318n, while the conjunction aggregator 116 coordinates determination of whether more classes are to be assembled (step 310), whether at least one policy per class succeeded (steps 320a and 320n), and whether all classes have been evaluated successfully (step 324) to implement the conjunction-of-disjunctions logic across the policy classes. The access control system 106 enforces the final access control decision by causing denial of access at step 322 or allowing access at step 328, and an audit module 118 records information associated with the denial, allowance, and any waiting periods at step 326 for governance, monitoring, and compliance purposes.

Figure 4 is a block diagram illustrating an implementation of access control data representation 400 for an access request in accordance with some implementations, where the access control data representation 400 corresponds to PORC data used in evaluating access control policies.

In the illustrated implementation, PORC stands for Principal, Operation, Resource, and Context, and provides a structured data representation used to define and organize elements required to make an access control decision. The access control data representation 400 is partitioned into a Principal/Identity portion 402, an Operation portion 404, a Resource portion 406, and a Context portion 408, each portion grouping related attributes that are consumed by policy evaluations.

The Principal/Identity portion 402 represents a principal, such as a user, application, or service that is requesting access to a resource, and includes attributes associated with the principal. These attributes may include, for example, identity attributes, group membership, role within a system, clearance level, and other characteristics that influence Principal-related policies in one or more policy classes.

The Operation portion 404 specifies an operation that the principal seeks to perform on the resource. Operation attributes may include an action type (for example, create, read, write, execute, subscribe, publish, or delete), as well as access-method specifics (for example, protocol, interface type, or other method-related characteristics) that can be evaluated by Access-Method-related policies.

The Resource portion 406 represents the resource that is the target of the access request and includes attributes used by resource-related policy classes to determine whether access should be granted. Resource attributes may include a resource identifier, resource type, membership in one or more resource groups, resource location, sensitivity, domain, organizational unit, and other properties that define access control requirements for the resource.

The Context portion 408 represents additional context associated with the access request and includes environmental or situational attributes that further constrain authorization decisions. Context attributes may include, for example, time of day, date, geographic location or IP address, authentication level, device type, multi-factor authentication status, alert level, or other environmental data used by context-sensitive policies.

In some implementations, policies are evaluated using the PORC data of access control data representation 400 to arrive at an access control decision, where each policy consumes one or more attributes from the Principal/Identity, Operation, Resource, and Context portions and contributes to policy disjunctions and policy conjunctions as defined for the policy classes.

Figure 5 is a block diagram illustrating example policy classes in accordance with some implementations. The policy classes 500 are depicted as including multiple distinct policy classes, each grouping policies related to a particular aspect of access control. In the illustrated example, the policy classes 500 include a principal-related policy class 502, a resource-related policy class 504, an access-method-related policy class 506, and a system-related policy class 508.

The principal-related policy class 502 contains a plurality of policies (for example, policies P1, P2, ..., Pn) that govern access based on attributes of a requesting principal or identity, such as identity, group membership, or role. The resource-related policy class 504 contains a plurality of policies (for example, policies R1, R2, ..., Rn) that govern access based on attributes of the resource, such as resource type, sensitivity, or membership in a resource group.

The access-method-related policy class 506 contains a plurality of policies (for example, policies A1, A2, ..., An) that govern access based on how the operation is performed, such as via a particular protocol, network path, or interface. The system-related policy class 508 contains a plurality of policies (for example, policies S1, S2, ..., Sn) that govern access based on system-wide conditions or constraints, such as tenancy, subsystem isolation, or other global configuration factors.

In some implementations, during evaluation of an access request, policies within each of the policy classes 502-508 are evaluated using PORC data as described with respect to Figure 4, a logical OR is applied across policies within each policy class, and a logical AND is applied across the resulting policy class outcomes to form a conjunction of disjunctions used to determine an overall access control decision.

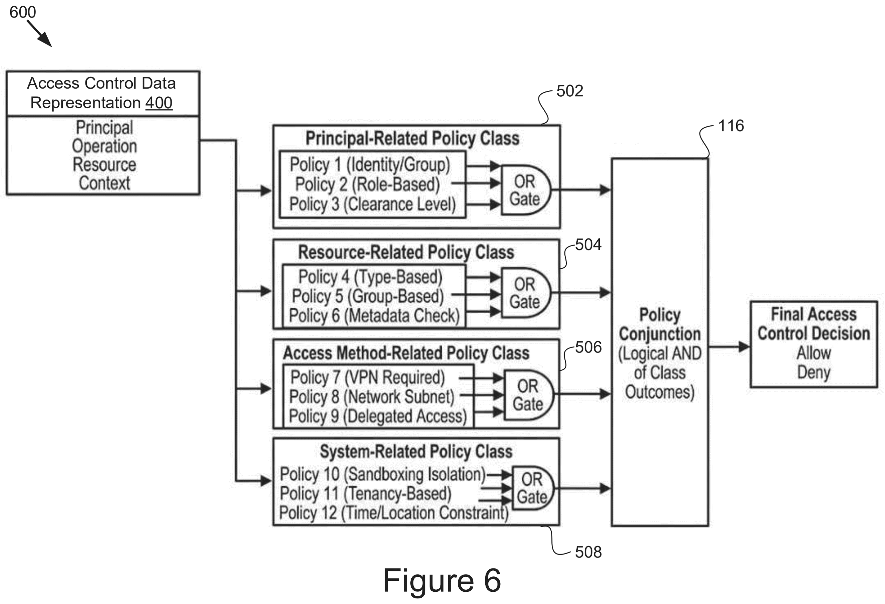

Figure 6 is a block diagram illustrating an example data flow 600 through example policy classes based on an access control data representation 400 executed within a container 120, e.g., an AgentVisor host-guest architecture of Figure 7. In this implementation, the AgentVisor 122 divides the environment into two distinct trust domains-a guest environment and a host environment-connected by a single, controlled communication channel 702.

The guest environment executes inside a Guest Sandbox 710 that forms part of a Host Container 120 encompassing the entire runtime. The Guest Sandbox 710 operates with network isolation (for example, network=none), such that it has no network interface and cannot initiate direct network connections and includes a Python agent that executes user-provided code. The Python agent communicates only with a Guest Runtime process (for example, implemented in Go) via a per-agent dedicated Unix domain socket and HTTP proxy 716, and the Guest Runtime bridges HTTP requests from the agent into gRPC calls over a Unix domain socket that is isolated from other agents, thereby providing the sole communication path from the guest environment to the host environment.

The host environment includes a Host Runtime that receives the gRPC calls and provides core services that apply the policy-class evaluation illustrated in Figure 6. In particular, the Host Runtime may include: (1) an HTTP proxy that issues external HTTP requests on behalf of the agent after performing policy evaluation based on the access control data representation 400 and substituting credentials as needed; (2) an MCP/A2A client, or other higher-level protocol components, configured to communicate with external MCP servers or downstream A2A agents on behalf of the agent; (3) a Temporal worker that manages workflow-based agent state and checkpoint persistence; (4) a credential intermediation layer that substitutes opaque tokens received from the Guest Sandbox with real secrets and credentials used in host-side calls; and (5) a Policy Engine integration (for example, a Manetu Policy Engine) that evaluates authorization decisions using Rego-based policies against a structured Principal-Operation-Resource-Context (PORC) model corresponding to the access control data representation 400.

In this implementation, the PORC data extracted from the access control data representation 400 is supplied to the principal-related policy class 502, the resource-related policy class 504, the access-method-related policy class 506, and the system-related policy class 508, each of which may be implemented or enforced within the Host Runtime's Policy Engine. Within each class, individual Rego-based policies are evaluated using the PORC attributes, their results are combined by a logical OR to produce a class outcome, and the class outcomes are provided to a policy conjunction component that applies a logical AND across the class outcomes to yield the final access control decision (allow or deny) that governs whether the Host Runtime will perform external HTTP requests, MCP/A2A operations, or other host-side actions on behalf of the isolated Python agent.

Figure 7 is a block diagram illustrating an implementation of architecture 700 for implementing AgentVisor 122 or an agent visor in accordance with some implementations, including a multi-layer defense-in-depth security architecture. This architecture employs multiple, independent security layers to ensure that agent code cannot escape its sandbox, access unauthorized resources, or compromise the host system; each layer addresses specific threat vectors and is designed so that compromise of any single layer does not compromise the overall security of the system.

Architecture 700 includes an agent visor container 120 that encloses a sandbox 710 and a host runtime 720. Sandbox 710 provides an isolated execution environment for one or more instances of AI agent code 712, which execute without direct network access and without direct visibility into host credentials or resources. Within the sandbox 710, a guest runtime 714 manages execution of the AI agent code 712 and intermediates its interactions with the outside world, while a communication interceptor 716 captures and normalizes outbound communications from the AI agent code 712 and forwards them over a controlled communication channel 702 toward the host runtime 720.

Host runtime 720 is depicted as including an inbound policy enforcement point (PEP) 722a, a workflow processor 724, a policy engine 726, an outbound PEP 722b, and a credential resolution module 730. Inbound PEP 722a receives intercepted requests from guest runtime 714 and enforces access-control policies, for example by consulting policy engine 726 using contextual PORC data, thereby forming one layer of authorization control over tool and resource access. Workflow processor 724 coordinates stateful agent workflows and may persist workflow state to a temporal cluster 704, which is illustrated as a separate data store coupled to host runtime 720 to provide durable and auditable execution history.

Policy engine 726 evaluates authorization policies (for example, the conjunction-of-disjunctions policy classes described elsewhere) to determine whether a requested operation should be allowed or denied, and outbound PEP 722b applies these decisions to govern calls from the AI agent code 712 to external services, APIs, or data stores. Credential resolution module 730 provides an additional layer of defense by mediating access to secrets and credentials, substituting opaque tokens from the sandbox 710 with actual credentials within host runtime 720 so that sensitive material is never exposed directly to the AI agent code 712. Acting together, the sandbox isolation, controlled communication channel 702, inbound PEPs 722a, outbound PEPs 722b, policy engine 726, workflow processor 724, credential resolution module 730, and temporal cluster 704 implement a multi-layer, defense-in-depth mechanism in which each layer mitigates different attack vectors and no single failure permits unauthorized access or host compromise.

The multiple security layers shown in Figure 7 collectively mitigate the risks of unrestricted tool access, credential exposure, insufficient execution isolation, and incomplete delegation tracking for AI agents. The sandbox 710 and agent visor container 120 enforce strong runtime isolation so that AI agent code 712 executes without direct network connectivity or operating-system-level access to host resources, limiting the blast radius even if an agent is compromised. The controlled communication channel 702, together with the communication interceptor 716 and inbound PEP 722a, ensures that every outbound operation initiated by the agent is mediated, inspected, and subjected to fine-grained authorization by the policy engine 726 before any external call or tool invocation is performed.

The credential resolution module 730 prevents non-human identities and secrets from being exposed directly to the sandbox 710 by resolving opaque tokens to actual credentials only within host runtime 720, thereby addressing credential leakage and misuse risks associated with traditional secrets management for LLM agents. Workflow processor 724 and temporal cluster 704 provide durable workflow execution, audit trails, and stateful context for each agent operation, enabling accurate reconstruction of delegation chains and end-to-end decision provenance for compliance and incident response. By distributing enforcement across independent layers-sandbox isolation, communication mediation, PEP-based policy enforcement, credential intermediation, and workflow/audit infrastructure-the architecture embodies a defense-in-depth design in which compromising any single layer is insufficient to grant an AI agent unauthorized access to tools, data, or external systems.

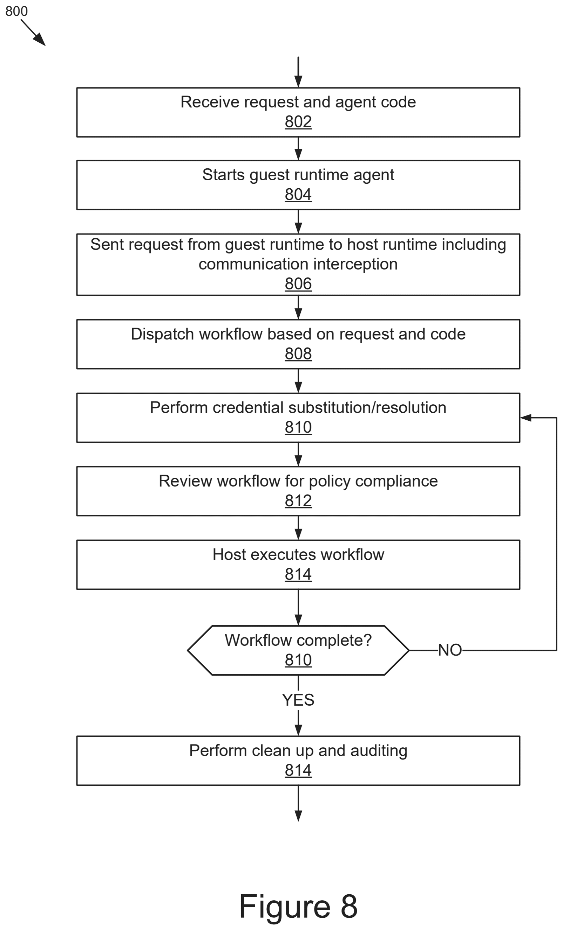

Figure 8 is a flow diagram illustrating a method 800 performed by an AgentVisor 122 in accordance with some implementations, including transparent HTTPS interception and dynamic credential substitution for sandboxed agents. Method 800 depicts lifecycle processing of a user-initiated agent run from workflow creation through HTTPS proxying, policy evaluation, credential substitution, and cleanup.

At step 802, a user or calling service initiates an agent run by sending a CreateRun request via a policy enforcement point (PEP) API to a Temporal worker, which starts a corresponding workflow. At step 804, a Temporal ThreadWorkflow dispatches execution by invoking a GuestService.InvokeAgent operation over a gRPC Unix domain socket, which spawns a gVisor (or similar) sandbox and starts a guest runtime agent process inside the sandbox.

At step 806, the guest runtime launches a Python agent process with its environment variables set to symbolic tokens rather than real credentials, for example setting ANTHROPIC_API_KEY to a token value of the form "mav-tok-... ". During guest runtime initialization, an ephemeral certificate authority (CA) temporary trust bundle is generated with a time-limited validity period. This hides real API keys from the AI agent by giving it "placeholder" tokens, while setting up temporary TLS certificates to monitor its HTTPS traffic.

In some implementations, at step 808, when the Python agent makes an outbound HTTPS request (for example, to api.anthropic.com) using any standard HTTP/HTTPS client library, the request is directed by an HTTPS_PROXY environment variable to a guest-side proxy listening on a localhost port. Upon receiving an HTTPS CONNECT request, the guest proxy extracts the target hostname and either generates or retrieves from a least-recently-used cache a per-hostname TLS certificate for that host, signed by the ephemeral CA and having a bounded validity interval (for example, one hour). The guest proxy then completes a TLS handshake with the agent using the generated certificate and terminates the TLS session, thereby enabling the proxy to decrypt the HTTPS traffic, read the HTTP headers and body in plaintext, and construct a gRPC HostService.HttpRequest (or HttpRequestStream) message that is sent over the Unix domain socket to the host runtime.

At a policy-check phase (corresponding to step 812), the host runtime receives the plaintext HTTP request via gRPC and performs authorization using a policy engine (for example, a Manetu Policy Engine) that evaluates policies against a Principal-Operation-Resource-Context (PORC) model. The principal may be derived from a caller JWT, the operation and target resource may be represented using a resource notation, and context attributes may capture runtime conditions; based on this evaluation, the host runtime either denies the request or proceeds. If the request is allowed, a credential substitution and resolution operation is performed by a host-side ProxyCredentialResolver that scans request headers (and, in some implementations, bodies) for symbolic token patterns with a distinctive prefix (for example, "mav-tok-alb2c3d4e5f6").

At startup, the host runtime auto-generates cryptographically random symbolic tokens prefixed with "mav-tok-" for each configured credential and injects these tokens into the guest environment as values of environment variables that agents and LLM client libraries expect, such as ANTHROPIC_API_KEY or OPENAI_API_KEY. Agent code and LLM libraries include these symbolic tokens in HTTP request headers, for example as Authorization: Bearer mav-tok-alb2c3d4e5f6, without modification to their code or configuration. When the ProxyCredentialResolver detects such a symbolic token, it consults configuration or a pluggable resolver to map the token to the corresponding real credential and substitutes the real credential into the outbound request before any upstream call is made. The resolver can use multiple resolution strategies, including bearer_token (static bearer tokens), api_key (API keys injected into custom headers), principal_passthrough (forwarding the caller's JWT to an upstream service), and token_exchange (obtaining scoped tokens via an RFC 8693 token exchange).

After credential substitution, the host runtime issues the HTTPS request to the upstream service using valid credentials and receives the response, which is returned via the gRPC channel to the guest proxy. The guest proxy re-encrypts the response using the established TLS session and delivers it back to the Python agent as a normal HTTPS response, with the interception and credential substitution remaining transparent to the agent code and HTTP client libraries. Throughout workflow execution, the agent and tools may persist state by issuing checkpoint operations (for example, SaveCheckpoint) through host-side services, store or retrieve data via host-mediated storage, and emit telemetry such as OpenTelemetry traces and logs. A workflow-completion decision determines whether additional processing is required; if not, the method proceeds to a cleanup and auditing phase, in which the run state is durably persisted, terminal status is recorded for future resume or replay, and ephemeral resources such as the sandbox, ephemeral CA, and symbolic tokens are cleaned up.

This design enables transparent HTTPS interception and dynamic credential substitution for sandboxed agents without requiring any modification to agent code, AI framework libraries, or third-party HTTP client libraries, while ensuring that real credentials never enter the guest sandbox and cannot be exfiltrated or manipulated by compromised agent code or prompt-injection attacks.

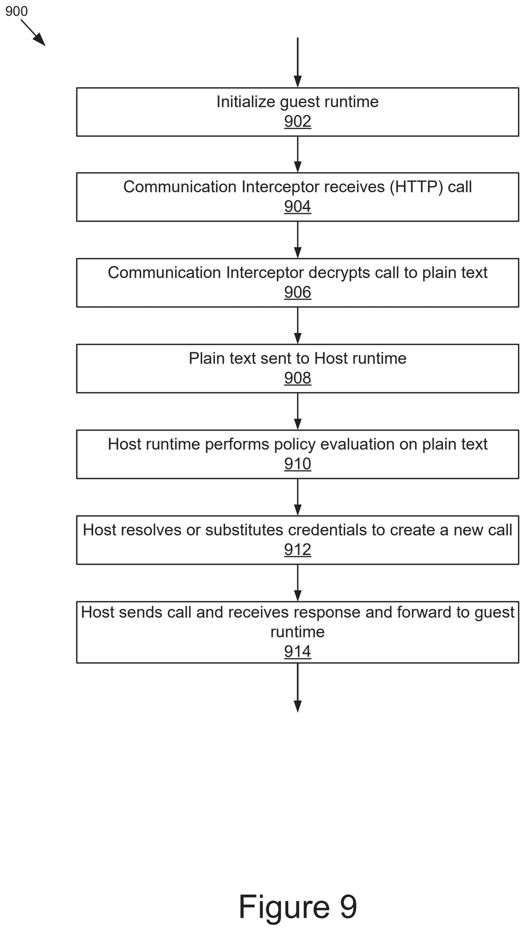

Figure 9 is a flow diagram illustrating a method 900 for call interception in accordance with some implementations. Method 900 shows how HTTPS calls made by a sandboxed agent are intercepted, decrypted, evaluated, rewritten with real credentials, and returned, without modifying the agent code or HTTP client libraries.

At step 902, the system initializes a guest runtime. As part of this initialization, the guest runtime generates an ephemeral certificate authority (CA) having a time-limited validity period, maintains the CA private key only in process memory, and never writes the key to persistent storage. The system builds a combined CA trust bundle by merging system-installed root CA certificates with the ephemeral CA certificate and writes the bundle to a temporary file referenced by one or more TLS trust environment variables (for example, SSL_CERT_FILE, REQUESTS_CA_BUNDLE, CURL_CA_BUNDLE, and NODE_EXTRA_CA_CERTS). This configuration causes standard TLS-aware HTTP libraries used by the agent to trust certificates signed by the ephemeral CA.

At step 904, a communication interceptor in the guest environment receives an outbound HTTPS call from the agent. In some implementations, the Python agent, such as an agent built with LangChain or another framework, issues an HTTPS request to an external service (for example, api.anthropic.com) using a standard HTTP client library. The request is routed to a per-agent guest proxy by an HTTPS_PROXY environment variable pointing to a dynamic localhost port on which the communication interceptor listens.

At step 906, the communication interceptor performs TLS interception and decryption. Upon receiving an HTTPS CONNECT request, the interceptor parses the target hostname and generates or retrieves from a least-recently-used cache, a per-hostname TLS certificate signed by the ephemeral CA, each such certificate having a limited validity period. Using this certificate, the interceptor completes a TLS handshake with the agent and terminates the TLS connection so that it can decrypt the HTTPS request and obtain the HTTP headers and body in plaintext form.

At step 908, the interceptor sends the plaintext request to a host runtime. The guest proxy constructs a gRPC HostService.HttpRequest (or HttpRequestStream, in a streaming implementation) containing the decrypted HTTP information and forwards that message over a dedicated Unix domain socket, which serves as the sole communication path between the guest and host environments.

At step 910, the host runtime performs processing on the plaintext request. The host runtime performs a policy evaluation on the plaintext request, for example by applying one or more access control policies to determine whether the requested operation is permitted. First, a policy engine, such as a Manetu Policy Engine, evaluates authorization policies using a Principal-Operation-Resource-Context (PORC) model that incorporates the requesting principal (for example, from a JWT), an operation identifier, a target resource identifier such as a Manetu Resource Notation (MRN), and context attributes. If the PORC-based evaluation denies the request, the host runtime returns a denial without contacting the upstream service. If the policy evaluation grants the request, the host runtime invokes a ProxyCredentialResolver that scans the HTTP headers, and in some cases the body, for symbolic token patterns with a distinctive prefix (for example, "mav-tok-alb2c3d4e5f6"). At startup, the host runtime auto-generates cryptographically random symbolic tokens prefixed with "mav-tok-" for each configured credential and injects these tokens into the guest environment as the values of environment variables expected by agents and LLM client libraries (for example, ANTHROPIC_API_KEY, OPENAI_API_KEY). The ProxyCredentialResolver matches these symbolic tokens to corresponding real credentials and substitutes the real credentials into the outbound request, using pluggable resolver types such as bearer_token, api_key, principal_passthrough, and token_exchange.

At step 912, the host runtime issues an actual HTTPS request to the upstream service using the substituted, valid authentication credentials and receives the service's response. The host runtime forwards the response over the gRPC channel to the guest proxy, which re-encrypts the response using the existing TLS session associated with the per-hostname certificate and returns the HTTPS response to the agent. From the agent's perspective, the call behaves as a standard HTTPS exchange, while the system has performed deep inspection, policy enforcement, and credential substitution entirely outside the sandboxed environment.

At step 914, the host runtime sends the authorized call to the target service, receives the corresponding response, and forwards the response back to the guest runtime, thereby completing an intercepted and mediated call flow while keeping real credentials outside of the guest environment.

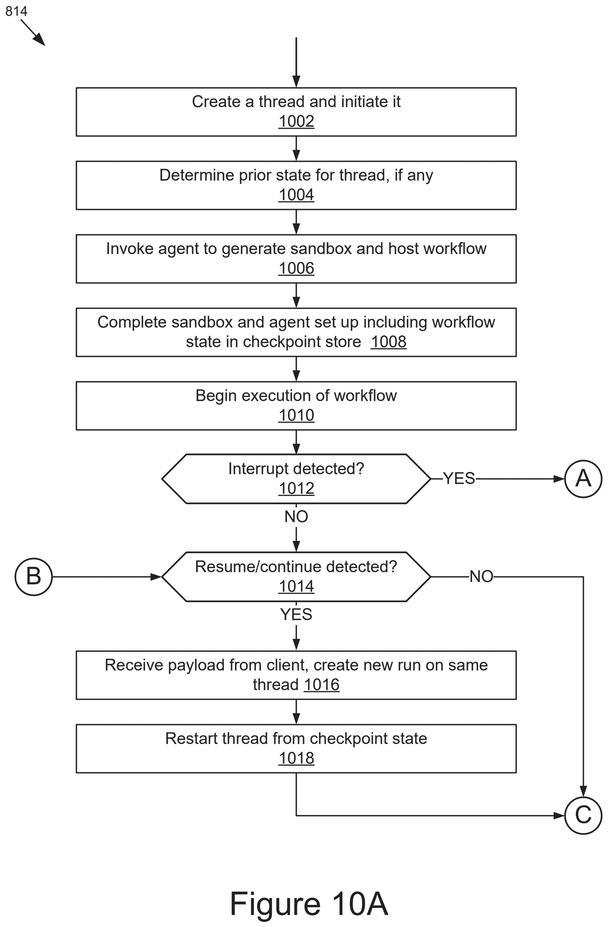

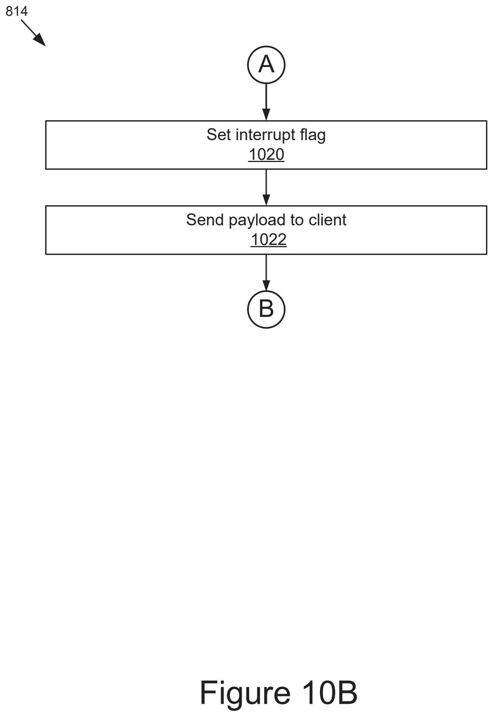

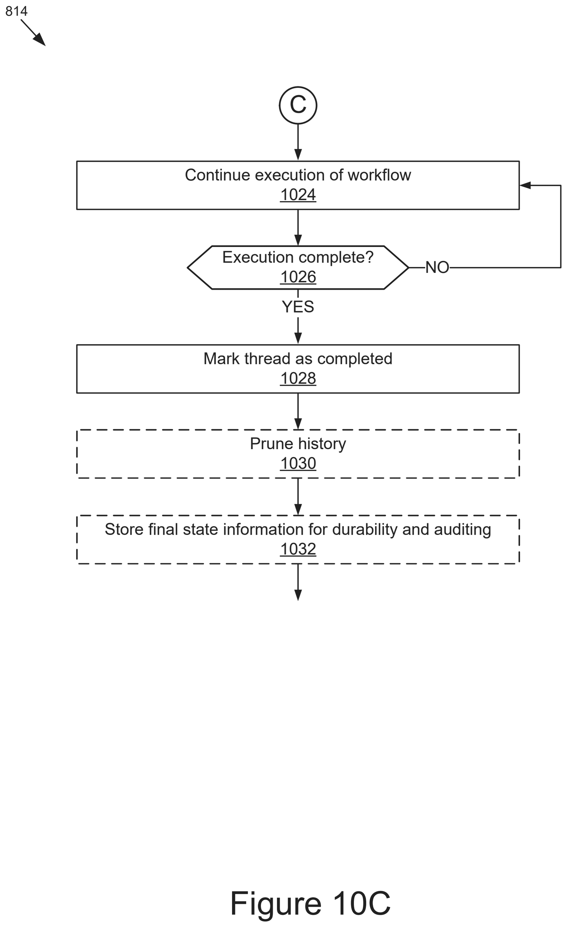

Referring now to Figures 10A, 10B and 10C a method 814 for Temporal workflow-based execution of an AI agent thread in accordance with some implementations is described.

At step 1002, the secure system 104 creates a new conversation thread and initiates a corresponding long-lived Temporal workflow instance, referred to as a ThreadWorkflow. At step 1004, the ThreadWorkflow determines whether there is any prior state associated with the thread, for example by loading stored workflow state, run history, or checkpoint information from a checkpoint store within the workflow state.

At step 1006, the workflow invokes an agent to generate a sandbox and host workflow environment, which in some implementations includes starting a sandboxed guest runtime and a host runtime as described with reference to earlier figures. At step 1008, the system completes sandbox and agent setup, including initializing any LangGraph or similar execution graph state and persisting an initial workflow state and checkpoint in a checkpoint store maintained by the ThreadWorkflow.

At step 1010, the workflow begins execution of the agent workflow for the thread, processing inputs, running graph nodes, and creating checkpoints as runs progress. During execution, at decision step 1012, the workflow determines whether an interrupt has been detected, for example when agent code emits an interrupt signal indicating human-in-the-loop input is required; if an interrupt is detected, the method 814 continues in step 1020 of Figure 10B for interrupt handling. If no interrupt is detected, the workflow proceeds to step 1014, where it determines whether a resume or continue request has been detected, such as a client-initiated request to resume an earlier interrupted run; if no resume is detected, execution continues at step 1024 of Figure 10C representing normal ongoing workflow processing and which is described below.

If, at step 1014, a resume or continue condition is detected, the method 814 proceeds to step 1016, where the workflow receives a payload from the client (for example, human-provided input), associates the payload with the existing thread, and creates a new run on the same ThreadWorkflow to carry out the resumed execution. At step 1018, the workflow restarts execution for the thread from a previously stored checkpoint state, for example by injecting a resume flag or payload into the agent input so that the agent can continue from the checkpointed graph state rather than starting over. From step 1018, the workflow continues continued execution in step 1024 of Figure 10C, enabling durable interrupt/resume behavior that survives process crashes, sandbox restarts, and Temporal failovers.

Referring now to Figure 10B, the method 814 Temporal workflow-based execution that handles an interrupt condition at step 1020. The workflow sets an interrupt flag, such as a field in the workflow state indicating that the most recent run on the thread has been interrupted (for example, lastRunInterrupted = true) and may record associated interrupt metadata and checkpoint information. At step 1022, the workflow sends an interrupt payload to a client, for example by returning the payload through an HTTP API or emitting a Temporal Signal that carries the payload to an external service or user interface. The payload may include information needed by a human operator (such as a question, suggested responses, or context), enabling a human-in-the-loop interaction. After step 1022, the method 814 returns to step 1014 of Figure 10A as has been described above to determine whether to resume execution on the same thread.

Referring now Figure 10C, the method 814 for Temporal workflow-based execution continues with the execution of the workflow at step 1024, for example by processing additional agent runs, applying checkpoints, and updating workflow state until a completion condition is reached. At decision step 1026, the workflow determines whether execution for the conversation thread is complete, such as when all required runs have finished or a terminal status has been reached. If execution is not complete, the method 814 returns to step 1024 for further processing; if execution is complete, the method 814 proceeds to step 1028, where the workflow marks the thread as completed and may update associated status fields and search attributes to reflect the terminal state.

In some implementations, the method 814 then optionally performs history pruning at step 1030, such as retaining only a bounded number of recent runs or checkpoints and discarding older history to control workflow event history size or prepare for a Continue-As-New operation. At step 1032, the workflow stores final state information for durability and auditing, which may include persisting summary metadata, final checkpoints, and audit records so that the completed thread can be queried, inspected, or replayed for debugging, compliance, or analytics purposes.

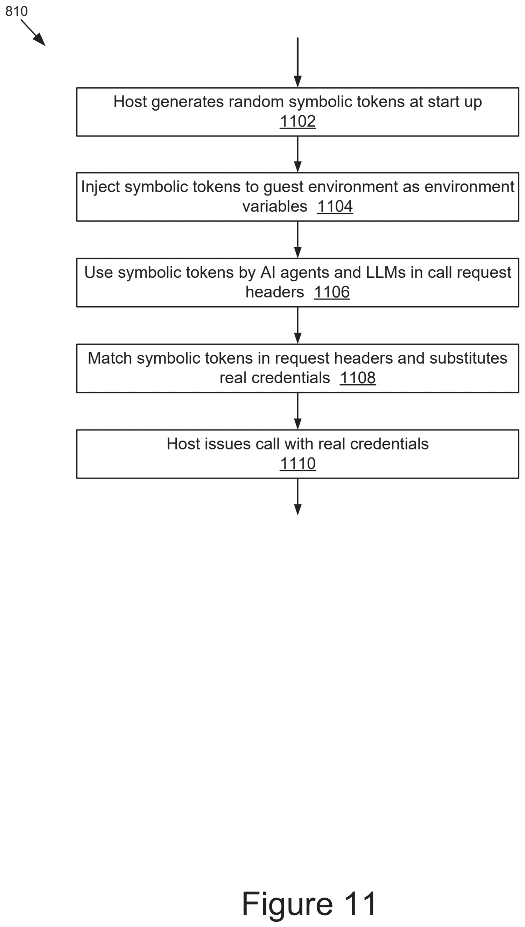

Figure 11 is a flow diagram illustrating a method 810 for credential substitution and resolution in accordance with some implementations. The method depicts how symbolic tokens are used to isolate credentials from sandboxed agents while still enabling authenticated outbound calls through a pluggable resolver framework.

At step 1102, a host runtime generates cryptographically random symbolic tokens at startup, each token having a distinctive prefix (for example, "mav-tok-") and being associated with a corresponding configured credential. The host registers these symbolic tokens in a resolver registry and maintains the mapping from each symbolic token to its underlying credential solely within the host environment.

At step 1104, the host injects the symbolic tokens into a guest environment as environment variable values that AI agents and large language model (LLM) client libraries expect, such as ANTHROPIC_API_KEY, OPENAI_API_KEY, or other tool-specific variables. At step 1106, agent code and LLM libraries use these symbolic tokens in outbound HTTP or HTTPS requests, for example by automatically including them in Authorization headers (for example, "Authorization: Bearer mav-tok-a1b2c3d4e5f6") or custom API key headers, without requiring any modifications to the agent or library code.

At step 1108, when a call is mediated by the host (for example, as described with reference to the call-interception flow), a host-side ProxyCredentialResolver examines the request headers (and, in some implementations, the body) to detect symbolic token patterns with the configured prefix. For each detected token, the ProxyCredentialResolver performs a type-based lookup in a resolver registry to identify an appropriate resolver (for example, bearer_token, api_key, principal_passthrough, or token_exchange) and invokes the resolver's Resolve method, optionally using configuration and a principal JWT, to obtain real credentials. The resolver returns a ResolvedCredentials structure that may include both HTTP headers and environment variables, allowing the same resolution logic to serve both HTTP proxy requests and MCP server stdio transports.

At step 1110, the host substitutes the real credentials into the outbound call-such as by overwriting the Authorization or API key headers with values returned by the resolver- and then issues the call to the upstream service on behalf of the agent. The resolved credentials remain confined to the host runtime and are not written back into the guest environment, thereby ensuring that real secrets never enter the sandbox, cannot be exfiltrated by compromised agent code, and are protected from prompt-injection-driven disclosure.

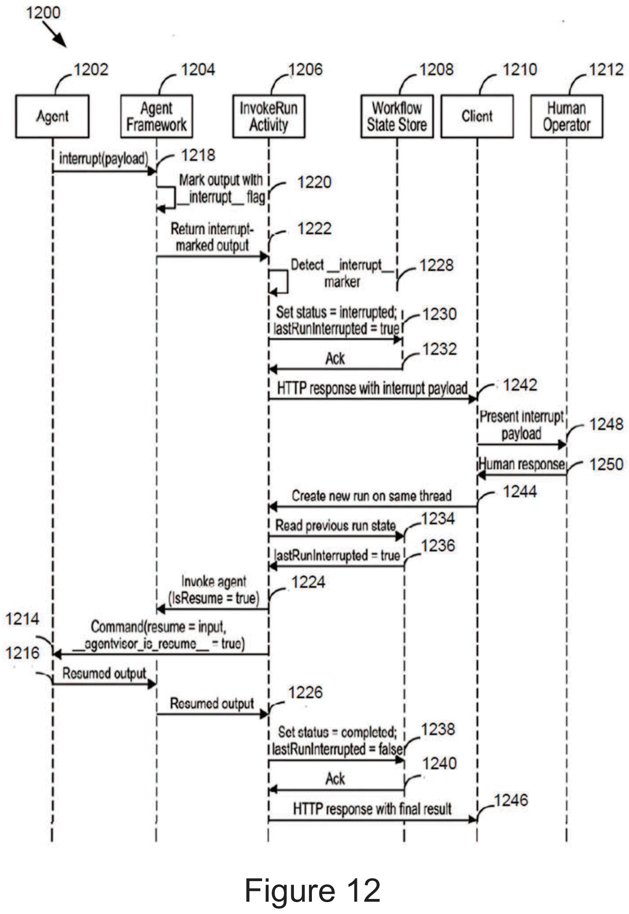

Figure 12 is a sequence diagram 1200 illustrating an interrupt/resume method for human-in-the-loop workflows in accordance with some implementations. The sequence diagram shows interactions among an agent 1202, an agent framework 1204, an InvokeRun activity 1206, a workflow state store 1208, a client 1210, and a human operator 1212 over time.

In an initial run, the agent 1202 issues an interrupt(payload) call to signal that human input is required. The agent framework 1204 receives this call and, at 1218, marks the agent's output with an interrupt flag and returns the interrupt-marked output to the InvokeRun activity 1206. At 1220 and 1222, the InvokeRun activity detects the interrupt marker, sets the run status to "interrupted," updates workflow state in the workflow state store 1208 to record that the last run for the thread was interrupted (for example, lastRunInterrupted = true), and acknowledges the update.

At 1232, the InvokeRun activity sends an HTTP response containing the interrupt payload back to the client 1210, which can then present the interrupt payload to the human operator 1212, as indicated at 1242 and 1248. The human operator 1212 provides a human response 1250, and the client 1210 issues a follow-up request that causes a new run to be created on the same thread, as shown at 1244. The workflow state store 1208 loads the prior run state 1234, confirms that lastRunInterrupted is true 1236, and the InvokeRun activity 1206 invokes the agent 1202 again with a resume command, for example by passing an input that contains a flag such as agentvisor_is_resume = true or IsResume = true, as indicated at 1224.

The agent 1202 treats this as a continuation of the earlier run, executing a Command(resume = input) to resume from the checkpointed state and producing resumed output 1216. The resumed output is returned through the agent framework 1204 and InvokeRun activity 1206, which sets the run status to "completed" and clears the interrupted flag (for example, lastRunInterrupted = false) in the workflow state store 1208, as indicated at 1238. The InvokeRun activity acknowledges the update at 1240 and sends an HTTP response containing the final result back to the client 1210 at 1246. Through this pattern, the workflow supports durable human-in-the-loop interactions that can be interrupted for human review and later resumed on the same thread, even across process crashes, guest restarts, or temporal service failovers.

In the above description, for purposes of explanation, numerous specific details were set forth. It will be apparent, however, that the disclosed technologies can be practiced without any given subset of these specific details. In other instances, structures and devices are shown in block diagram form. For example, the disclosed technologies are described in some implementations above with reference to user interfaces and particular hardware.

Reference in the specification to "one embodiment," "some embodiments" or "an embodiment" means that a particular feature, structure, or characteristic described in connection with the embodiment is included in at least some embodiments of the disclosed technologies. The appearances of the phrase "in some embodiments" in various places in the specification are not necessarily all referring to the same embodiment.

Some portions of the detailed descriptions above were presented in terms of processes and symbolic representations of operations on data bits within a computer memory. A process can generally be considered a self-consistent sequence of steps leading to a result. The steps may involve physical manipulations of physical quantities. These quantities take the form of electrical or magnetic signals capable of being stored, transferred, combined, compared, and otherwise manipulated. These signals may be referred to as being in the form of bits, values, elements, symbols, characters, terms, numbers, or the like.

These and similar terms can be associated with the appropriate physical quantities and can be considered labels applied to these quantities. Unless specifically stated otherwise as apparent from the prior discussion, it is appreciated that throughout the description, discussions utilizing terms for example "processing" or "computing" or "calculating" or "determining" or "displaying" or the like, may refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The disclosed technologies may also relate to an apparatus for performing the operations herein. This apparatus may be specially constructed for the required purposes, or it may include a general-purpose computer selectively activated or reconfigured by a computer program stored in the computer.

The disclosed technologies can take the form of an entirely hardware implementation, an entirely software implementation or an implementation containing both software and hardware elements. In some implementations, the technology is implemented in software, which includes but is not limited to firmware, resident software, microcode, etc.

Furthermore, the disclosed technologies can take the form of a computer program product accessible from a non-transitory computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

A computing system or data processing system suitable for storing and/or executing program code will include at least one processor (e.g., a hardware processor) coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modems, and Ethernet cards are just a few of the currently available types of network adapters.

Finally, the processes and displays presented herein may not be inherently related to any particular computer or other apparatus. Various general-purpose systems may be used with programs in accordance with the teachings herein, or it may prove convenient to construct a more specialized apparatus to perform the required method steps. The required structure for a variety of these systems will appear from the description below. In addition, the disclosed technologies were not described with reference to any particular programming language. It will be appreciated that a variety of programming languages may be used to implement the teachings of the technologies as described herein.

The foregoing description of the implementations of the present techniques and technologies has been presented for the purposes of illustration and description. It is not intended to be exhaustive or to limit the present techniques and technologies to the precise form disclosed. Many modifications and variations are possible in light of the above teaching. It is intended that the scope of the present techniques and technologies be limited not by this detailed description. The present techniques and technologies may be implemented in other specific forms without departing from the spirit or essential characteristics thereof. Likewise, the particular naming and division of the modules, routines, features, attributes, methodologies, and other aspects are not mandatory or significant, and the mechanisms that implement the present techniques and technologies or its features may have different names, divisions, and/or formats. Furthermore, the modules, routines, features, attributes, methodologies, and other aspects of the present technology can be implemented as software, hardware, firmware, or any combination of the three. Also, wherever a component, an example of which is a module, is implemented as software, the component can be implemented as a standalone program, as part of a larger program, as a plurality of separate programs, as a statically or dynamically linked library, as a kernel loadable module, as a device driver, and/or in every and any other way known now or in the future in computer programming. Additionally, the present techniques and technologies are in no way limited to implementation in any specific programming language, or for any specific operating system or environment. Accordingly, the disclosure of the present techniques and technologies is intended to be illustrative but not limiting.

## Claims

1. A computer-implemented method for access control, comprising:
receiving, by one or more processors, a request to access a secure resource;
creating, by one or more processors, an access control data representation;
assembling and selecting a plurality of policy classes based on the access control data representation;
evaluating whether the plurality of policy classes is satisfied to generate a plurality of evaluations;
determining whether the plurality of evaluations is satisfied;
responsive to determining that plurality of evaluations is satisfied, allowing access to the secure resource; and
responsive to determining that one of the plurality of evaluations is not satisfied, denying access to the secure resource.

2. The computer-implemented method of claim 1, wherein the access control data representation comprises:
a principal portion having an identity attribute, a role attribute, and a security clearance attribute of a requesting principal;
an operation portion having an action type attribute of a requested operation;
a resource portion having an attribute of a resource being accessed; and
a context portion having an environment attribute associated with the request to access.

3. The computer-implemented method of claim 1 or 2, wherein the plurality of policy classes is selected from a group consisting of:
a principal-related policy class having one or more policies that govern access based on an attribute of a requesting principal;
a resource-related policy class having one or more policies that govern access based on an attribute of a resource for which access is requested;
an access-method-related policy class having one or more policies that govern access based on how an operation is performed; and
a system-related policy class having one or more policies that govern access based on system-wide conditions.

4. The computer-implemented method of any one of claims 1 to 3, wherein the assembling and selecting the plurality of policy classes selects four policy classes and the four policy classes are a principal-related policy class having one or more policies that govern access based on an attribute of an requesting principal, a resource-related policy class having one or more policies that govern access based on an attribute of a resource for which access is requested, an access-method-related policy class having one or more policies that govern access based on how an operation is performed, and a system-related policy class having one or more policies that govern access based on system-wide conditions.

5. The computer-implemented method of any one of claims 1 to 4, wherein assembling and selecting the plurality of policy classes comprises:
identifying policy classes specified in the access control data representation;
retrieving the policy classes specified in the access control data representation;
determining one or more policies for each of the policy classes;
grouping the one or more policies by class; and
assembling class grouping for evaluation.

6. The computer-implemented method of any one of claims 1 to 5, wherein the evaluating whether the plurality of policy classes is satisfied to generate an evaluation per class comprises applying a logical OR to individual results of policy evaluations within each policy class such that the policy class is satisfied when at least one policy in the class is true.

7. The computer-implemented method of any one of claims 1 to 6, wherein the determining whether the plurality of evaluations is satisfied includes applying a logical AND between the plurality of evaluations to determine that all classes are satisfied.

8. The computer-implemented method of any one of claims 1 to 7, wherein evaluating whether the plurality of policy classes is satisfied is performed in parallel for each policy class.

9. The computer-implemented method of any one of claims 1 to 8, wherein evaluating whether the plurality of policy classes is satisfied further comprises:
aggregating evaluation results for the plurality of policy classes; and
applying a short-circuit evaluation whereby evaluation terminates upon determining that any policy within a class is satisfied or that any policy class is unsatisfied.

10. The computer-implemented method of any one of claims 1 to 9, further comprising:
recording, by an audit module, information associated with an allow-access operation or a deny-access operation; and
storing the recorded information for governance, monitoring, or compliance purposes, organized by policy class and policy.

11. The computer-implemented method of any one of claims 1 to 10, wherein the request to access the secure resource is received from an AI agent executing within a guest sandbox that operates with network isolation such that the guest sandbox has no network interface and cannot initiate direct network connections.

12. A system comprising one or more processors and a memory operably coupled to the one or more processors, the memory storing instructions that, when executed by the one or more processors, cause the one or more processors to perform the computer-implemented method of any one of claims 1 to 11.

13. The system of claim 12, wherein evaluating whether the plurality of policy classes is satisfied comprises applying a logical OR to individual results of policy evaluations within each policy class, and wherein determining whether the plurality of evaluations is satisfied comprises applying a logical AND across the plurality of evaluations.

14. The system of any one of claims 12 or 13, wherein the one or more processors are further caused to:
record, by an audit module, information associated with an allow-access operation or a deny-access operation; and
store the recorded information for governance, monitoring, or compliance purposes, organized by policy class and policy.

15. A computer program product comprising instructions which, when executed by one or more processors, cause the one or more processors to perform the computer-implemented method of any one of claims 1 to 11.
